# FASCICULE DE BREVET EUROPEEN

(11) **EP 2 900 521 B1**
(45) Date de publication et mention de la délivrance du brevet: **05.04.2017**
(21) Numéro de dépôt: 13774761.4
(22) Date de dépôt: 19.09.2013
(51) Int. Cl.: F16L 3/24, F16L 3/13, B60R 16/02

(54) **DISPOSITIF DE MONTAGE D'UNE GOULOTTE DE CABLAGE SUR UNE PIECE DE CARROSSERIE AUTOMOBILE**
VORRICHTUNG ZUR INSTALLATION EINES KABELKANALS AN EINEM KAROSSERIETEIL EINES KRAFTFAHRZEUGS
DEVICE FOR INSTALLING CABLE TRUNKING ON A MOTOR VEHICLE BODY PART

(43) Date de publication de la demande: 05.08.2015
(73) Titulaire: Renault s.a.s., 92100 Boulogne-Billancourt (FR)
(72) Inventeur: LEGUEUX, Gilles, 78650 Beynes (FR)
(86) Numéro de dépôt international: PCT/FR2013/052163
(87) Numéro de publication internationale: WO 2014/049236

(56) Documents cités:
- EP-A1- 2 428 715
- DE-A1- 4 424 288
- US-A- 5 806 812
- US-A1- 2011 260 025

## Description

La présente invention concerne un dispositif de montage d'une goulotte de câblage sur une pièce de carrosserie automobile.

Il s'agit de positionner une goulotte par clipsage sur la paroi d'une pièce de carrosserie automobile, notamment un montant de caisse, tel qu'un pied milieu ou un montant de baie. Pour cacher les câblages qu'on est amené à faire passer le long de ces montants, il est connu de clipser sur la paroi une goulotte de câblage, constituée par un profilé en C. La goulotte est en principe clipsée de manière à venir s'abouter sans jeu à une surface transversale à la goulotte, en particulier à la garniture de pavillon dans le cas d'un montant de caisse. Or un problème constaté est que ces goulottes clipsées sont souvent positionnées de manière imprécise par rapport à cette garniture de pavillon et laissent un jeu visible, ou bien, même quand elles sont bien positionnées au montage initial, les vibrations de la caisse pendant la conduite finissent par déplacer la goulotte et créer un jeu inésthétique.

US 2011/260025 A1 et US 5 806 812 A dévoilent de tels dispositifs.

L'invention a pour but de trouver une solution à ce problème.

L'invention atteint son but grâce à un dispositif de montage selon la revendication 1.

De cette manière, la goulotte clipsée peut être positionnée exactement par rapport à son environnement, et notamment par rapport à la garniture de pavillon et sa position ne se modifiera pas au cours de l'utilisation du véhicule.

Avantageusement, la surface transversale d'appui est constituée par une surface de référence d'une agrafe de câblage, par exemple une portion supérieure de l'agrafe.

Le relief d'appui est avantageusement une nervure transversale prévue dans la goulotte. Elle est formée de manière à venir s'appuyer sur la surface transversale d'appui, et en particulier sur la surface de référence déterminée sur une agrafe de l'ensemble d'agrafes de câblage.

D'autres caractéristiques et avantages de l'invention ressortiront de la description suivante d'un exemple de réalisation. Il sera fait référence aux dessins annexés sur lesquels :
- la figure 1 est une vue en perspective d'un montant de caisse sous pavillon, équipé d'une goulotte conforme à l'invention.
- la figure 2 est une vue analogue à la figure 1, goulotte retirée.
- la figure 3 est une vue montrant l'intérieur de la goulotte de l'invention avec le câblage et les agrafes de câblage.
- la figure 4 est une vue en section A-A de la figure 3.
- la figure 5 est une vue du montant et de la goulotte, en coupe verticale passant par le milieu d'une agrafe de câblage.

Les figures montrent un montant 1 vertical ou oblique de caisse, tel qu'un pied milieu de caisse ou un montant de baie, constitué par un profilé de tôle. Le montant 1 relie une partie basse de caisse au pavillon, lequel est recouvert d'une garniture de pavillon 2.

Sur une paroi du profilé métallique formant le montant 1, éventuellement conformée en gorge 3, on peut venir maintenir et/ou guider un câblage 4 par des agrafes de câblage 5 qui ont été préalablement fixées dans des trous prévus sur la paroi du profilé. À cet effet, les agrafes comportent d'une part des moyens d'ancrage dans le montant, d'autre part des moyens de réception et de maintien ou de guidage de câblage, et enfin des moyens de clipsage d'une goulotte.

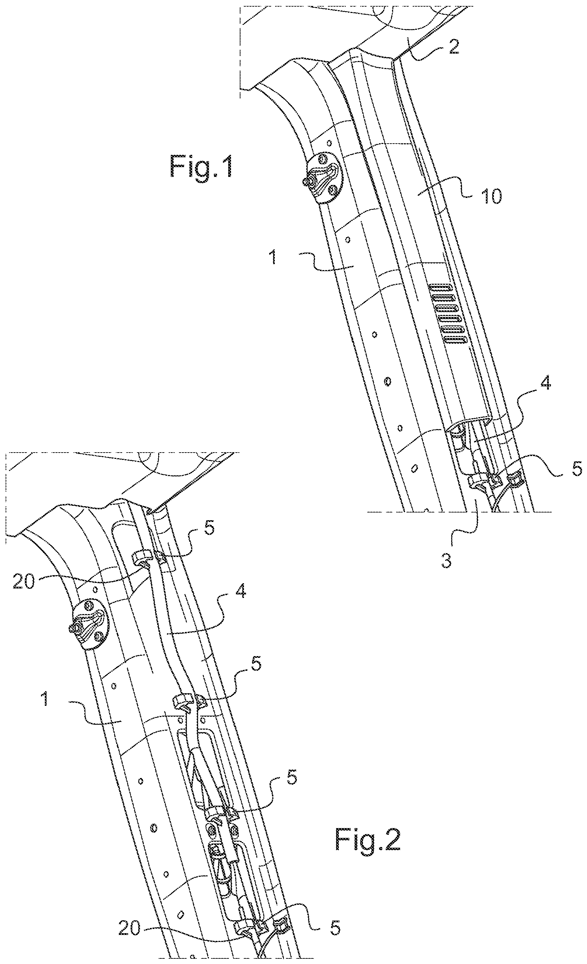

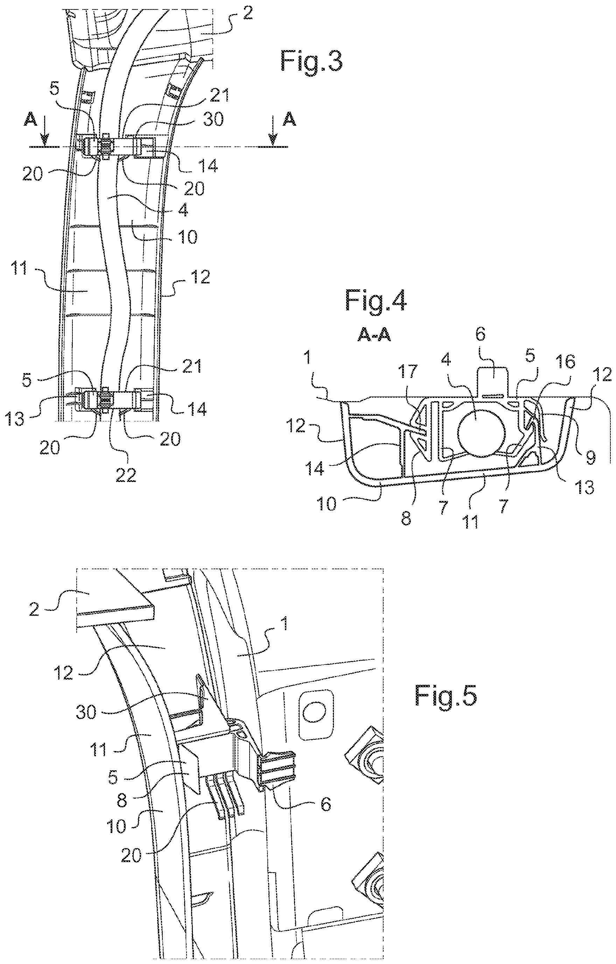

Chaque agrafe 5 se présente sensiblement sous la forme d'une pince élastique en C munie d'un pied 6 de fixation encliquetable (par clipsage) dans un trou de la paroi du profilé 1. Le pied 6, par exemple cylindrique à profil en « dents de sapin », constitue un moyen d'ancrage rapide de l'agrafe dans la paroi du montant profilé 1, qui place l'agrafe dans une position fixe et déterminée. La pince en C comporte deux branches élastiques 7, 7' entre lesquelles le câblage 4 peut être introduit et se trouve retenu et/ou guidé grâce à la forme en crochet desdites branches, retournées vers l'intérieur de la pince. Les branches 7, 7' constituent les moyens de réception et de maintien ou de guidage du câblage. L'agrafe 5 comporte aussi, de part et d'autre des branches 7, 7', deux ailes 8 et 9 destinées à recevoir des éléments d'accrochage de la goulotte 10 de câblage, destinée à venir se fixer au-dessus du câblage 4 pour le protéger et cacher comme montré à la figure 1. Les ailes 8 et 9 constituent les moyens de clipsage de goulotte. L'agrafe 5 comporte aussi à leur surface inférieure des barbes élastiques 20 destinées à s'appuyer élastiquement sur le câblage 4 et à le guider ou le maintenir. Comme on le voit sur la figure 3, chaque agrafe a, en vue de face (parallèlement à son pied 6), un profil sensiblement rectangulaire, avec une face supérieure 21 et une face inférieure 22. La face supérieure 21, ou au moins un élément de celle-ci, est destinée à servir de surface de référence topologique et de butée à un élément de la goulotte qui sera décrit plus loin. Cette surface supérieure ou portion supérieure d'appui 21 est en fait formée par le bord supérieur des branches 7, 7' et/ou de l'une et/ou l'autre des ailes 8, 9.

La goulotte 10 a une forme de canal en C, avec un fond 11 et deux ailes 12, lesquelles viennent sensiblement en appui sur la paroi du profilé 1 quand la goulotte 10 est fixée. Pour sa fixation, la goulotte 10 comporte de place en place des profils moulés 13 et 14 dont la forme est destinée à coopérer avec les agrafes 5 pour permettre le clipsage de la goulotte 10 sur lesdites agrafes. Le profil de clipsage 13 part du fond 11 et se termine par un crochet 16 qui vient s'accrocher sur un crochet complémentaire formé sur la partie extérieure de la branche 7'. Le profil 14 prend naissance sur le fond 11 et l'aile 12 et comporte un crochet 17 qui vient s'engager dans une fente formée dans l'aile 8, laquelle comporte vers l'extérieur une rampe permettant, lors de la mise en place de la goulotte 10, au crochet 17 de glisser sur cette rampe et de faire pivoter élastiquement l'aile 8 vers l'intérieur de l'agrafe, jusqu'au moment où le crochet 17 peut pénétrer dans ladite fente.

Les éléments qui viennent d'être décrits permettent de clipser la goulotte 10 sur le montant de caisse 1 et de la maintenir dans une certaine position, mais n'assurent pas exactement son positionnement vertical, d'où il peut résulter un jeu visible initial entre le haut de la goulotte 10 et la garniture de pavillon 2. De plus, même en l'absence de jeu initial si la goulotte a été soigneusement positionnée, les vibrations du véhicule en fonctionnement peuvent entraîner un déplacement de la goulotte dans sa direction longitudinale et faire apparaître un jeu. Afin de garantir un positionnement vertical exact et une absence de jeu, aussi bien au montage qu'en cours d'utilisation du véhicule, il est prévu selon l'invention un appui vertical de la goulotte sur un élément de référence du montage, et en pratique, il est prévu d'ajouter dans la goulotte verticale une nervure horizontale 30, par exemple formée par moulage au niveau du profil de clipsage 14, cette nervure 30 venant s'appuyer sur la surface horizontale supérieure 21 d'une des agrafes 5 choisie pour référence. Comme on le voit, la nervure 30 est formée en équerre entre le fond 11 et l'aile 12 de la goulotte, ces deux liaisons lui donnant une grande stabilité. De la sorte, la position verticale de la goulotte 10 se trouve fixée avec précision par rapport à la surface de référence 21 choisie, en l'occurrence le haut d'une agrafe 5 (une seule des plusieurs agrafes de câblage), et on peut donc faire en sorte que le clipsage de la goulotte 10 place celle-ci sans jeu par rapport à la garniture de pavillon 2. Ainsi, la nervure d'appui 30 fixe la position de départ de la goulotte 10 sur le montant 1 et la maintient en cours d'utilisation du véhicule.

## Revendications

1. Dispositif de montage d'une goulotte de câblage (10) sur une pièce (1) de carrosserie automobile **caractérisé en ce qu'**il comprend :
- une pièce de carrosserie (1),
- au moins une agrafe de câblage (5) comportant d'une part des moyens (7, 7') pour maintenir en guidage un câblage (4) et d'autre part des moyens (8, 9) de clipsage de goulotte,
- au moins une surface transversale d'appui (21) positionnée et fixée directement ou indirectement sur la pièce de carrosserie de façon à former une référence topologique,
- **caractérisé en ce que** la goulotte (10) comprend des moyens complémentaires (13, 16, 14, 17) de clipsage coopérant avec ceux (8, 9) de la ou des agrafes (5) pour permettre le clipsage de la goulotte (10) sur la ou les agrafes (4), ce clipsage fixant la position de la goulotte (10) dans des directions transversales à la goulotte, la goulotte (10) comportant de plus un relief transversal d'appui (30) venant lors du clipsage prendre appui sur la surface transversale d'appui (21), de manière à bloquer la goulotte (10) dans une direction longitudinale de la goulotte lorsqu'elle est clipsée.

2. Dispositif selon la revendication 1, **caractérisé en ce que** le relief d'appui (30) est une nervure transversale prévue dans la goulotte (10).

3. Dispositif selon la revendication 1 ou 2, **caractérisé en ce que** la surface transversale d'appui (21) est constituée par une surface de référence d'une agrafe de câblage (5).

4. Dispositif selon la revendication 3, **caractérisé en ce que** la surface de référence de l'agrafe (5) est formée par une portion supérieure (21) de l'agrafe (5).

5. Dispositif selon l'une quelconque des revendications 1 à 4, **caractérisé en ce que** les agrafes (5) comportent d'une part des moyens d'ancrage (6) dans la pièce de carrosserie (1), d'autre part des moyens de réception (7, 7') et de maintien ou de guidage de câblage, et enfin des moyens (8, 9) de clipsage d'une goulotte.

6. Dispositif selon la revendication 5, **caractérisé en ce que** les moyens d'ancrage (6) de l'agrafe (5) dans la pièce de carrosserie (1) sont constitués par un pied encliquetable.

7. Dispositif selon l'une quelconque des revendications précédentes, **caractérisé en ce que** la pièce de carrosserie (1) est un montant de caisse, en particulier un pied milieu ou un montant de baie.

## Patentansprüche

1. Vorrichtung zur Montage eines Kabelkanals (10) an einem Automobilkarosserieteil (1), **dadurch gekennzeichnet, dass** sie Folgendes umfasst:
- ein Karosserieteil (1),
- mindestens eine Kabelklammer (5), die einerseits Mittel (7, 7') zum Halten und Führen von Kabeln (4) und andererseits Kanaleinrastmittel (8, 9) aufweist,
- mindestens eine quer verlaufende Stützfläche (21), die direkt oder indirekt an dem Karosserieteil positioniert und befestigt ist, um einen topologischen Bezug zu bilden,
**dadurch gekennzeichnet, dass** der Kanal (10) komplementäre Einrastmittel (13, 16, 14, 17) umfasst, die mit jenen (8, 9) der Klammer oder Klammern (5) zusammenwirken, um ein Einrasten des Kanals (10) an der Klammer oder den Klammern (4) zu gestatten, wobei die Position des Kanals (10) durch dieses Einrasten in quer zum Kanal verlaufenden Richtungen festgelegt wird, wobei der Kanal (10) ferner ein quer verlaufendes Stützprofil (30) aufweist, das sich beim Einrasten auf der quer verlaufenden Stützfläche (21) abstützt, so dass der Kanal (10), wenn er eingerastet ist, in einer Längsrichtung des Kanals festgeklemmt ist.

2. Vorrichtung nach Anspruch 1, **dadurch gekennzeichnet, dass** das Stützprofil (30) eine im Kanal (10) vorgesehene Querrippe ist.

3. Vorrichtung nach Anspruch 1 oder 2, **dadurch gekennzeichnet, dass** die quer verlaufende Stützfläche (21) aus einer Bezugsfläche einer Kabelklammer (5) besteht.

4. Vorrichtung nach Anspruch 3, **dadurch gekennzeichnet, dass** die Bezugsfläche der Klammer (5) durch einen oberen Abschnitt (21) der Klammer (5) gebildet ist.

5. Vorrichtung nach einem der Ansprüche 1 bis 4, **dadurch gekennzeichnet, dass** die Klammern (5) einerseits Mittel (6) zur Verankerung im Karosserieteil (1), andererseits Mittel (7, 7') zum Kabelaufnehmen und -halten oder -führen und schließlich Mittel (8, 9) zum Einrasten eines Kanals aufweisen.

6. Vorrichtung nach Anspruch 5, **dadurch gekennzeichnet, dass** die Mittel (6) zur Verankerung der Klammer (5) im Karosserieteil (1) aus einem Rastfuß bestehen.

7. Vorrichtung nach einem der vorhergehenden Ansprüche, **dadurch gekennzeichnet, dass** das Karosserieteil (1) ein Karosserieholm, insbesondere eine B-Säule oder ein Fensterholm, ist.

## Claims

1. Device for assembling cable trunking (10) on a motor vehicle body component (1), **characterized in that** it comprises:
- a body component (1),
- at least one cable clip (5) which comprises, on the one hand, means (7, 7') for retaining a cable (4) in a guided manner and, on the other hand, means (8, 9) for clip-fitting the trunking,
- at least one transverse support surface (21) which is positioned and fixed, directly or indirectly, on the body component in order to form a topological reference location,
**characterized in that** the trunking (10) comprises complementary clip-fitting means (13, 16, 14, 17) which cooperate with the means (8, 9) of the clips (s) (5) in order to allow the trunking (10) to be clip-fitted to the clip (s) (4), this clip-fitting fixing the position of the trunking (10) in directions transverse to the trunking, the trunking (10) further comprising a transverse support relief (30) which, during the clip-fitting operation, is supported on the transverse support surface (21) in order to block the trunking (10) in a longitudinal direction of the trunking when it is clip-fitted.

2. Device according to Claim 1, **characterized in that** the support relief (30) is a transverse rib which is provided in the trunking (10).

3. Device according to Claim 1 or Claim 2, **characterized in that** the transverse support surface (21) is constituted by a reference surface of a cable clip (5).

4. Device according to Claim 3, **characterized in that** the reference surface of the clip (5) is formed by an upper portion (21) of the clip (5).

5. Device according to any one of Claims 1 to 4, **characterized in that** the clips (5) comprise, on the one hand, means (6) for anchoring in the body component (1) and, on the other hand, means (7, 7') for receiving and retaining or guiding the cable, and finally means (8, 9) for clip-fitting a trunking.

6. Device according to Claim 5, **characterized in that** the means (6) for anchoring the clip (5) in the body component (1) are constituted by a snap-fitting foot.

7. Device according to any one of the preceding claims, **characterized in that** the body component (1) is a bodywork pillar, in particular a B-pillar or a windscreen pillar.
